# EUROPÄISCHE PATENTANMELDUNG

(11) **EP 4 406 413 A1**
(43) Veröffentlichungstag der Anmeldung: **31.07.2024**
(21) Anmeldenummer: 24151903.2
(22) Anmeldetag: 15.01.2024
(51) Int. Cl.: A21C 3/02, A21C 3/06, A21C 9/06

(54) **TEIGVERARBEITUNGSVORRICHTUNG MIT SCHWENKBAREN FÜHRUNGSELEMENTEN**

(30) Priorität: 30.01.2023 DE 102023102125
(71) Anmelder: Fritsch Bakery Technologies GmbH & Co. KG, 97348 Markt Einersheim (DE)
(72) Erfinder: WAGNER, Alex, 97228 Rottendorf (DE)
(74) Vertreter: Grünecker Patent- und Rechtsanwälte PartG mbB

(57) **Zusammenfassung**

Eine Teigverarbeitungsvorrichtung (1) umfasst eine Fördervorrichtung (3), die dazu konfiguriert ist, ein Teigstück (4) in einer Produktionsrichtung (P) zu fördern, und eine Wirkvorrichtung (6), die der Fördervorrichtung (3) gegenüberliegend angeordnet ist und dazu konfiguriert ist, mit dem durch die Fördervorrichtung (3) geförderten Teigstück (4) einzugreifen. Die Teigverarbeitungsvorrichtung (1) umfasst des Weiteren eine Andrückvorrichtung (8), die der Fördervorrichtung (3) gegenüberliegend, in der Produktionsrichtung (P) der Wirkvorrichtung (6) nachfolgend angeordnet ist und dazu konfiguriert ist, das Teigstück (4) an die Fördervorrichtung (3) anzudrücken, und einen Rahmen (2), an dem die Wirkvorrichtung (6) und die Andrückvorrichtung (8) montiert sind. Die Teigverarbeitungsvorrichtung (1) zeichnet sich dadurch aus, dass die Andrückvorrichtung (8) durch schwenkbare Führungselemente (10) mit dem Rahmen (2) verbunden ist.

## Beschreibung

Die Erfindung bezieht sich auf Teigverarbeitungsvorrichtungen gemäß dem Oberbegriff des Anspruchs 1.

Es sind Teigverarbeitungsvorrichtungen bekannt, die dazu konfiguriert sind, auf Transportbändern transportierte Teigstücke zu bearbeiten, bspw. zu wickeln, zu verdrehen oder auf andere Art und Weise zu formen. Dazu sind oft Riemen oder Bänder vorgesehen, die von oben auf das transportierte Teigstück einwirken. Beispiele für solche Vorrichtungen sind in DE 10 2017 109 925 A1 oder DE 10 2020 210 735 A1 offenbart. Wie in DE 10 2017 109 925 A1 zusätzlich offenbart, ist es außerdem bekannt, die Teigstücke nachdem auf sie eingewirkt wurde, durch ein weiteres Band an das Transportband anzudrücken, um den zuvor erzeugten Zustand des Teigstücks zu fixieren. Andernfalls könnten elastische Rückstellkräfte einen durch das Einwirken erzeugten Zustand rückgängig machen. Um dies zu verhindern, muss das Band zum Andrücken möglichst dicht an dem Band zum Einwirken positioniert werden.

Um eine Anpassung an unterschiedliche Produkte zu ermöglichen, ist es wünschenswert, den Abstand zwischen dem Band zum Andrücken und dem Transportband einstellbar auszuführen. Dies wird jedoch dadurch erschwert, dass das Band zum Einwirken an der dem Band zum Andrücken zugewandten Seite auf einer runden Walze geführt wird, d. h. dass sich bei vertikaler Einstellung des Bands zum Andrücken auch der horizontale Abstand zu dem Band zum Einwirken verändert. Dadurch wird die Anpassung der Teigverarbeitungsvorrichtung an unterschiedliche Produkte kompliziert und es besteht das Risiko, dass die Bänder dabei kollidieren, was ein Einstellen während des Betriebs verhindert. Letzteres kann aber vorteilhaft sein, um Auswirkungen der Einstellung auf das Produkt direkt erkennen zu können.

Es ist eine Aufgabe der vorliegenden Erfindung, eine Teigverarbeitungsvorrichtung anzugeben, welche eine möglichst einfache Anpassung ermöglicht. Diese Aufgabe wird gelöst durch eine Teigverarbeitungsvorrichtung mit den Merkmalen des Anspruchs.

Es wird eine Teigverarbeitungsvorrichtung offenbart, welche eine Fördervorrichtung, die dazu konfiguriert ist, ein Teigstück in einer Produktionsrichtung zu fördern, und eine Wirkvorrichtung, die der Fördervorrichtung gegenüberliegend angeordnet ist und dazu konfiguriert ist, mit dem durch die Fördervorrichtung geförderten Teigstück einzugreifen, umfasst. Die Teigverarbeitungsvorrichtung umfasst des Weiteren eine Andrückvorrichtung, die der Fördervorrichtung gegenüberliegend, in der Produktionsrichtung der Wirkvorrichtung nachfolgend angeordnet ist und dazu konfiguriert ist, das Teigstück an die Fördervorrichtung anzudrücken, und einen Rahmen, an dem die Wirkvorrichtung und die Andrückvorrichtung montiert sind. Die Fördervorrichtung kann ebenfalls an dem Rahmen und/oder an einer der Teigverarbeitungsvorrichtung vorausgehenden oder nachfolgenden Vorrichtung montiert sein. Die Teigverarbeitungsvorrichtung zeichnet sich dadurch aus, dass die Andrückvorrichtung durch schwenkbare Führungselemente mit dem Rahmen verbunden ist.

Durch die schwenkbaren Führungselemente kann die Bewegung der Andrückvorrichtung geführt werden, sodass bei einer Einstellung eines Abstands zwischen der Fördervorrichtung und der Andrückvorrichtung automatisch eine horizontale Verschiebung erfolgen kann. Insbesondere können die Führungselemente so ausgelegt sein, dass die Andrückvorrichtung möglichst nah an dem Ende der Wirkvorrichtung positioniert wird, ohne mit ihr zu kollidieren. Als der Fördervorrichtung gegenüberliegend können die Wirkvorrichtung und/oder die Andrückvorrichtung bspw. dann angesehen werden, wenn sie oberhalb, insbesondere vertikal oberhalb, des Förderbands angeordnet sind. Dies ist insbesondere dann anwendbar, wenn die Fördervorrichtung im Wesentlichen horizontal orientiert ist. Als im Wesentlichen horizontal ausgerichtet kann die Fördervorrichtung angesehen werden, wenn sie entlang der Produktionsrichtung kein oder nur ein geringes Gefälle bzw. eine geringe Steigung, insbesondere weniger als -45° bzw. weniger als +45, aufweist.

Die Wirkvorrichtung kann ein Wirkelement aufweisen, welches an einer der Andrückvorrichtung zugewandten Seite auf einer bogenförmigen Bahn geführt sein kann. Als ein Wirkelement kann ein Endlosband oder -riemen angesehen werden. Auch eine Vielzahl von Riemen ist denkbar. Das Wirkelement, insbesondere eines der vorgenannten, kann über eine Walze oder ein anderes Rotationselement, welches als rotierbares Führungselement eingesetzt sein kann, geführt sein. Dadurch kann das Wirkelement auf der bogenförmigen Bahn geführt sein, die bspw. kreisbogenförmig sein kann.

Es ist vorteilhaft, wenn die schwenkbaren Führungselemente derart dimensioniert sind, dass eine der Wirkvorrichtung zugewandte Kante der Andrückvorrichtung beim Schwenken der Führungselemente zumindest abschnittsweise parallel zu der bogenförmigen Bahn bewegt wird. Dadurch oder durch andere Maßnahmen können die schwenkbaren Führungselemente dazu konfiguriert sein einen, bspw. in Produktionsrichtung gemessenen, Abstand zwischen der der Wirkvorrichtung zugewandte Kante der Andrückvorrichtung und der Wirkvorrichtung, insbesondere dem Wirkelement, im Wesentlichen konstant zu halten werden, während ein, bspw. quer, insbesondere senkrecht, zur Produktionsrichtung gemessener Abstand zwischen der Andrückvorrichtung und der Fördervorrichtung verändert wird. Als Kante der Andrückvorrichtung kann z. B. eine Umlenkfalte eines Andrückbands der Andrückvorrichtung angesehen werden.

Vorteilhafterweise kann die Wirkvorrichtung ein Rotationselement aufweisen, welches dazu konfiguriert sein kann, ein Wirkelement zu führen. Eine Länge eines Hebelarms der schwenkbaren Führungselemente kann im Wesentlichen dem Abstand zwischen der der Wirkvorrichtung zugewandten Kante der Andrückvorrichtung und einer Rotationsachse des Rotationselements entsprechen. Dadurch können die schwenkbaren Führungselemente dazu konfiguriert sein, die Andrückvorrichtung so zu führen, dass die der Wirkvorrichtung zugewandten Kante der Andrückvorrichtung parallel zu der bogenförmigen Bahn geführt wird. Als Hebelarm kann eine Distanz zwischen zwei Schwenkgelenken, insbesondere zwischen den Schwenkachsen dieser Schwenkgelenke, angesehen werden.

Es kann vorteilhaft sein, wenn die schwenkbaren Führungselemente derart dimensioniert sind, dass bei einer Veränderung eines Abstands zwischen der Andrückvorrichtung und der Fördervorrichtung eine Orientierung der Andrückvorrichtung relativ zu der Fördervorrichtung gleich bleibt. Als Orientierung kann bspw. ein Winkel angesehen werden, in dem ein Andrückelement der Andrückvorrichtung, z. B. ein Andrückband, relativ zu einem Förderelement der Fördervorrichtung, z. B. einem Förderband, angeordnet ist. Auch eine parallele Anordnung des Andrückelements der Andrückvorrichtung, z. B. des Andrückbands, zu dem Förderelement der Fördervorrichtung, z. B. dem Förderband, kann als Orientierung angesehen werden.

Es können z. B. vier schwenkbare Führungselemente vorgesehen sein.

Vorteilhafterweise kann die Teigverarbeitungsvorrichtung einen Betätigungsmechanismus umfassen, der dazu konfiguriert ist, einen Abstand zwischen der Andrückvorrichtung und der Fördervorrichtung einzustellen. Dadurch kann die Andrückvorrichtung an unterschiedliche Teigprodukte anpassbar sein. Der Betätigungsmechanismus kann z. B. eine Welle und einen Nocken umfassen, wobei die Welle drehbar an dem Rahmen gelagert sein kann und der Nocken drehfest an der Welle montiert sein kann. Dadurch oder durch andere Maßnahmen kann der Nocken dazu konfiguriert sein, die Andrückvorrichtung relativ zu der Fördervorrichtung zu verschieben, insbesondere von der Fördervorrichtung fort oder auf die Fördervorrichtung zu. Besonders günstig ist es, wenn der Betätigungsmechanismus des Weiteren ein Nockenlager aufweist, das an der Andrückvorrichtung montiert sein kann und dazu konfiguriert sein kann, mit dem Nocken einzugreifen.

Das Nockenlager kann ein Langloch aufweisen. Dadurch oder durch andere Maßnahmen kann der Betätigungsmechanismus dazu konfiguriert sein, eine Bewegung der Andrückvorrichtung zuzulassen, die quer, insbesondere senkrecht, zu einer Einstellrichtung des Betätigungsmechanismus orientiert ist. Als Einstellrichtung des Betätigungsmechanismus kann eine Richtung angesehen werden, in welcher der Abstand zwischen der Fördervorrichtung und der Andrückvorrichtung gemessen wird, insbesondere kann die Einstellrichtung quer, vorzugsweise senkrecht, zu der Produktionsrichtung orientiert sein.

Der Nocken kann z. B. einen kreisförmigen Außenumfang aufweisen. Alternativ oder zusätzlich kann der Nocken exzentrisch an der Welle angeordnet sein.

Die Erfindung bezieht sich auf eine Teigverarbeitungsvorrichtung der vorstehend beschriebenen Art. Im Folgenden wir deine vorteilhafte Ausführungsform beispielhaft anhand von Zeichnungen erläutert.
Figur 1 zeigt eine schematische Seitenansicht einer Teigverarbeitungsvorrichtung
Figur 2 zeigt eine schematische Draufsicht auf die Teigverarbeitungsvorrichtung aus Figur 1 ohne die Wirkvorrichtung
Figur 3 zeigt eine schematische Schnittansicht der Teigverarbeitungsvorrichtung, wobei die verlauf des Schnittes in Figur 2 durch die Schnittlinie III-III angedeutet ist.

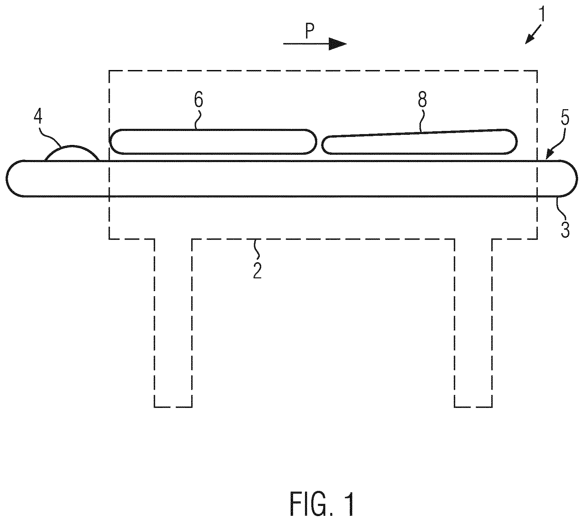

In Figur 1 ist eine Teigverarbeitungsvorrichtung 1 in einer schematischen Seitenansicht dargestellt. Die Teigverarbeitungsvorrichtung 1 kann einen Rahmen 2 umfassen. Dieser ist in Figur 1 nur durch unterbrochene Linien angedeutet, um die übrigen gezeigten Komponenten zeigen zu können. Die Teigverarbeitungsvorrichtung 1 kann des Weiteren eine Fördervorrichtung 3 umfassen. Die Fördervorrichtung 3 kann dazu konfiguriert sein, ein Teigstück 4 in einer Produktionsrichtung P zu fördern. Die Fördervorrichtung 3 kann ein Förderelement umfassen, auf dem das Teigstück 4 transportiert ist. Im vorliegenden Ausführungsbeispiel ist als Förderelement beispielhaft ein Förderband 5 dargestellt.

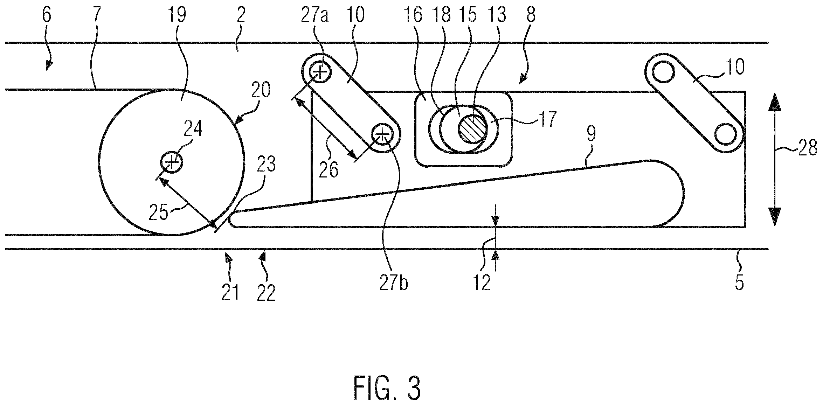

Wie im vorliegenden Ausführungsbeispiel ebenfalls gezeigt, kann die Teigverarbeitungsvorrichtung 1 eine Wirkvorrichtung 6 umfassen. Die Wirkvorrichtung 6 kann der Fördervorrichtung 3 gegenüberliegend angeordnet sein. Im vorliegenden Ausführungsbeispiel ist beispielhaft eine Anordnung oberhalb der Fördervorrichtung 3 gezeigt. Die Wirkvorrichtung 6 kann dazu konfiguriert sein, mit dem durch die Fördervorrichtung 3 geförderten Teigstück 4 einzugreifen. Des Weiteren kann die Wirkvorrichtung 6 beispielsweise dazu eingerichtet sein, das Teigstück 4 aufzuwickeln oder zu verdrehen. Dazu kann die Wirkvorrichtung 6 ein Wirkelement 7 (siehe Figur 3), wie zum Beispiel einen Riemen oder ein Band, umfassen. Die Wirkvorrichtung 6 kann an dem Rahmen 2 montiert sein.

Die Teigverarbeitungsvorrichtung 1 kann des Weiteren eine Andrückvorrichtung 8 umfassen. Auch die Andrückvorrichtung 8 kann der Fördervorrichtung 3 gegenüberliegend, zum Beispiel oberhalb, wie in Figur 1 dargestellt, angeordnet sein. Des Weiteren kann die Andrückvorrichtung 8 der Wirkvorrichtung 6 in Produktionsrichtung P nachfolgend angeordnet sein. Die Andrückvorrichtung kann dazu konfiguriert sein, das Teigstück 4 an die Fördervorrichtung 3, insbesondere an das Förderelement bzw. Förderband 5, anzudrücken. Dazu kann die Andrückvorrichtung 8 ein Andrückelement umfassen, beispielsweise ein Andrückband 9 (siehe Figur 3). Die Andrückvorrichtung 8 kann an dem Rahmen 2 montiert sein.

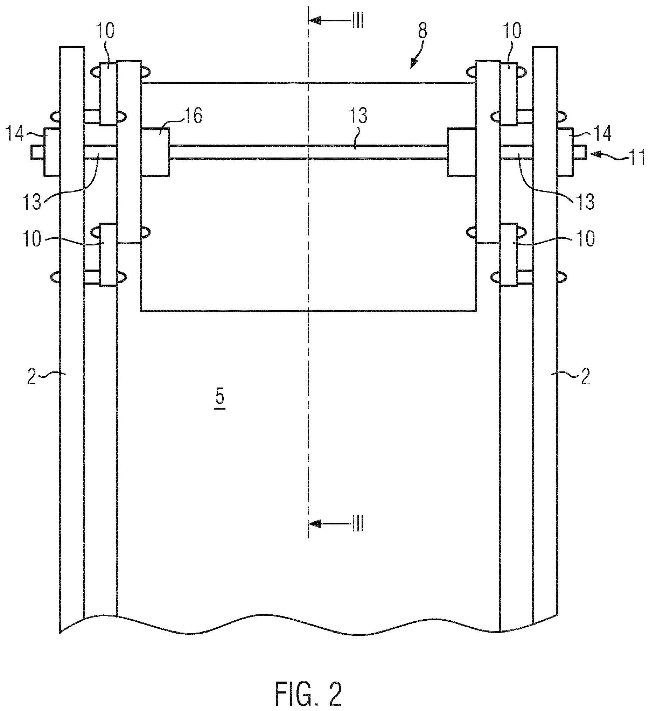

In Figur 2 ist eine schematische Draufsicht von oben auf die Teigverarbeitungsvorrichtung 1 dargestellt. Die Wirkvorrichtung 6 ist zur besseren Übersichtlichkeit nicht gezeigt. Es ist nun erkennbar, dass die Teigverarbeitungsvorrichtung 1 schwenkbare Führungselemente 10 umfassen kann. Die Andrückvorrichtung 8 kann durch die schwenkbaren Führungselemente 10 mit dem Rahmen 2 verbunden sein. In Figur 2 ebenfalls zu erkennen ist, dass die Teigverarbeitungsvorrichtung 1 einen Betätigungsmechanismus 11 umfassen kann. Der Betätigungsmechanismus 11 kann dazu konfiguriert sein, einen Abstand 12 zwischen der Andrückvorrichtung 8 und der Fördervorrichtung 3 einzustellen. Der Betätigungsmechanismus 11 kann eine Welle 13 umfassen. Die Welle 13 kann drehbar an dem Rahmen 2 gelagert sein. Dazu kann an gegenüberliegenden Seiten des Rahmens 2 jeweils ein Wellenlager 14 vorgesehen sein. Der Betätigungsmechanismus 11 kann des Weiteren einen Nocken 15 umfassen, wie im Folgenden mit Bezug auf Figur 3 noch näher erläutert werden wird.

In Figur 3 ist eine schematische Schnittansicht der Teigverarbeitungsvorrichtung 1 dargestellt. Der Verlauf des Schnittes ist in Figur 2 durch die Schnittlinie III-III angedeutet. Nun ist zu erkennen, dass der Nocken 15 an der Welle 13 montiert sein kann. Insbesondere kann der Nocken 15 drehfest an der Welle 13 montiert sein. Außerdem zu erkennen ist, dass der Betätigungsmechanismus 11 des Weiteren ein Nockenlager 16 umfassen kann. Das Nockenlager 16 kann an der Andrückvorrichtung 8 montiert sein. Das Nockenlager 16 kann des Weiteren dazu konfiguriert sein, mit dem Nocken 15 einzugreifen. Das Nockenlager 16 kann ein Langloch 17 aufweisen. Das Langloch 17 kann dazu konfiguriert sein, den Nocken 15 aufzunehmen. Der Nocken 15 kann einen kreisförmigen Außenumfang 18 aufweisen.

In Figur 3 ebenfalls zu erkennen ist, dass die Wirkvorrichtung 6 ein Rotationselement 19 umfassen kann. Das Rotationselement 19 kann dazu konfiguriert sein, das Wirkelement 7 zu führen. Insbesondere kann das Wirkelement 7 zumindest abschnittsweise, insbesondere an einer der Andrückvorrichtung 8 zugewandten Seite 21 der Wirkvorrichtung 6, auf einer bogenförmigen Bahn 20 geführt werden. Auf einer der Wirkvorrichtung 6 zugewandten Seite 22 der Andrückvorrichtung 8 kann die Andrückvorrichtung 8 eine der Wirkvorrichtung 6 zugewandte Kante 23 aufweisen. Wie im vorliegenden Ausführungsbeispiel, kann die der Wirkvorrichtung 6 zugewandte Kante 23 durch eine Umlenkfalte des Andrückbands 9 gebildet werden. Das Rotationselement 19 kann um eine Rotationsachse 24 rotierbar sein. Zwischen der Rotationsachse 24 und der Kante 23 kann ein Abstand 25 vorgesehen sein. Die schwenkbaren Führungselemente 10 können einen Hebelarm 26 aufweisen. Der Hebelarm 26 kann zwischen zwei Schwenkgelenken 27 des jeweiligen Führungselements 10, insbesondere zwischen den Rotationsachsen der Schwenkgelenke 27, definiert sein. Ein erstes Schwenkgelenk 27a kann schwenkbar mit dem Rahmen 2 verbunden sein. Ein zweites Schwenkgelenk 27b der Schwenkgelenke 27 kann mit der Andrückvorrichtung 8 schwenkbar verbunden sein.

Gemäß der Erfindung können die schwenkbaren Führungselemente 10 dazu konfiguriert sein, die Andrückvorrichtung 8 so zu führen, dass die Kante 23 parallel zu der bogenförmigen Bahn 20 geführt wird. So kann sichergestellt werden, dass bei einem Einstellen des Abstands 12 zwischen der Andrückvorrichtung 8 und der Fördervorrichtung 3 die Andrückvorrichtung 8, insbesondere die Kante 23, immer möglichst nah an der Wirkvorrichtung 6, insbesondere an dem Wirkelement 7, positioniert ist.

Das Einstellen des Abstands 12 kann vorteilhafterweise durch den Betätigungsmechanismus 11 erfolgen. Durch Drehen der Welle 13 kann der Nocken 15 mit dem Nockenlager 16 eingreifen. Dadurch kann die Andrückvorrichtung 8 relativ zu dem Rahmen 2 in einer Einstellrichtung 28 verschoben werden. Die Einstellrichtung 28 kann quer, insbesondere senkrecht, zu der Produktionsrichtung P orientiert sein. Durch die schwenkbaren Führungselemente 10 kann sichergestellt werden, dass bei jeglicher Verschiebung der Andrückvorrichtung 8 parallel zu der Einstellrichtung 28 auch eine Verschiebung parallel zu der Produktionsrichtung P erfolgt. Das Langloch 17 kann dazu konfiguriert sein, eine Verschiebung der Andrückvorrichtung 8 relativ zu dem Nocken 15 und oder der Welle 13, insbesondere parallel zu der Produktionsrichtung P, zu erlauben.

## Patentansprüche

1. Teigverarbeitungsvorrichtung (1), umfassend:
eine Fördervorrichtung (3), die dazu konfiguriert ist, ein Teigstück (4) in einer Produktionsrichtung (P) zu fördern,
eine Wirkvorrichtung (6), die der Fördervorrichtung (3) gegenüberliegend angeordnet ist und dazu konfiguriert ist, mit dem durch die Fördervorrichtung (3) geförderten Teigstück (4) einzugreifen,
eine Andrückvorrichtung (8), die der Fördervorrichtung (3) gegenüberliegend, in der Produktionsrichtung (P) der Wirkvorrichtung (6) nachfolgend angeordnet ist und dazu konfiguriert ist, das Teigstück (4) an die Fördervorrichtung (3) anzudrücken,
einen Rahmen (2), an dem die Wirkvorrichtung (6) und die Andrückvorrichtung (8) montiert sind,
**dadurch gekennzeichnet, dass** die Andrückvorrichtung (8) durch schwenkbare Führungselemente (10) mit dem Rahmen (2) verbunden ist.

2. Teigverarbeitungsvorrichtung nach Anspruch 1, wobei die Wirkvorrichtung (6) ein Wirkelement (7) aufweist, welches an einer der Andrückvorrichtung (8) zugewandten Seite (21) auf einer bogenförmigen Bahn (20) geführt ist.

3. Teigverarbeitungsvorrichtung nach Anspruch 2, wobei die schwenkbaren Führungselemente (10) derart dimensioniert sind, dass eine der Wirkvorrichtung (6) zugewandte Kante (23) der Andrückvorrichtung (8) beim Schwenken der Führungselemente (10) zumindest abschnittsweise parallel zu der bogenförmigen Bahn (20) bewegt wird.

4. Teigverarbeitungsvorrichtung nach Anspruch 2 oder 3, wobei die bogenförmige Bahn (20) kreisbogenförmig ist.

5. Teigverarbeitungsvorrichtung nach einem der vorangehenden Ansprüche, wobei die Wirkvorrichtung (6) ein Rotationselement (19) aufweist, welches dazu konfiguriert ist, ein Wirkelement (7) zu führen, und eine Länge eines Hebelarms (26) der schwenkbaren Führungselemente (10) im Wesentlichen dem Abstand (25) zwischen einer der Wirkvorrichtung (6) zugewandten Kante (23) der Andrückvorrichtung (8) und einer Rotationsachse (24) des Rotationselements (19) entspricht.

6. Teigverarbeitungsvorrichtung nach einem der vorangehenden Ansprüche, wobei die schwenkbaren Führungselemente (10) derart dimensioniert sind, dass bei einer Veränderung eines Abstands (12) zwischen der Andrückvorrichtung (8) und der Fördervorrichtung (3) eine Orientierung der Andrückvorrichtung (8) relativ zu der Fördervorrichtung (3) gleich bleibt.

7. Teigverarbeitungsvorrichtung nach einem der vorangehenden Ansprüche, wobei vier schwenkbare Führungselemente (10) vorgesehen sind.

8. Teigverarbeitungsvorrichtung nach einem der vorangehenden Ansprüche, des Weiteren umfassend einen Betätigungsmechanismus (11), der dazu konfiguriert ist, einen Abstand (12) zwischen der Andrückvorrichtung (8) und der Fördervorrichtung (3) einzustellen.

9. Teigverarbeitungsvorrichtung nach Anspruch 8, wobei der Betätigungsmechanismus (11) eine Welle (13) und einen Nocken (15) umfasst, wobei die Welle (13) drehbar an dem Rahmen (2) gelagert ist und der Nocken (15) drehfest an der Welle (13) montiert ist.

10. Teigverarbeitungsvorrichtung nach Anspruch 9, wobei der Betätigungsmechanismus (11) des Weiteren ein Nockenlager (16) aufweist, das an der Andrückvorrichtung (8) montiert ist und dazu konfiguriert ist, mit dem Nocken (15) einzugreifen.

11. Teigverarbeitungsvorrichtung nach Anspruch 10, wobei das Nockenlager (16) ein Langloch (17) aufweist.

12. Teigverarbeitungsvorrichtung nach einem der Ansprüche 9 bis 11, wobei der Nocken (15) einen kreisförmigen Außenumfang (18) aufweist.

13. Teigverarbeitungsvorrichtung nach einem der Ansprüche 9 bis 12, wobei der Nocken (15) exzentrisch an der Welle (13) angeordnet ist.
